(19) Europäisches Patentamt
European Patent Office
Office européen des brevets

(11) EP 3 888 464 A1

(12) EUROPEAN PATENT APPLICATION

(43) Date of publication:
06.10.2021 Bulletin 2021/40

(21) Application number: 20167805.9

(22) Date of filing: 02.04.2020

(51) Int Cl.:
*A01N 43/653* (2006.01) *A01N 25/02* (2006.01)
*A01P 3/00* (2006.01) *A01N 43/88* (2006.01)
*A01N 47/36* (2006.01) *A01N 25/30* (2006.01)
*A01P 13/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Rotam Agrochem International Company Limited**
**Chai Wan (HK)**

(72) Inventor: **Bristow, James Timothy**
**Chai Wan (HK)**

(74) Representative: **Akers, Noel James**
**N.J. Akers & Co**
**63 Lemon Street**
**Truro, Cornwall TR1 2PN (GB)**

# (54) PLANT PROTECTION COMPOSITION HAVING IMPROVED PENETRATION

(57) The use of an N-alkylpyrrolidone in the promotion of penetration of an agrochemical active ingredient into a plant is provided. Preferably, an N-alkylpyrrolidone of the general formula (I) is employed:

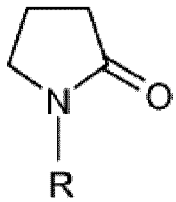

(I)

wherein R is an alkyl group, preferably wherein R is a linear alkyl group.

Agrochemical compositions comprising an agrochemical active ingredient and an N-alkylpyrrolidone are also provided.



Printed by Jouve, 75001 PARIS (FR)

## Description

The present invention relates to plant protection compositions, in particular to plant protection compositions in which the active ingredient exhibits an improved penetration into the plant.

Plant protection compositions containing one or more active ingredients to treat and prevent pest infestations of target plants or their surroundings are well known in the art and can include one or more active ingredients, such as fungicides, insecticides, herbicides. Plant protection compositions may also comprise one or more active ingredients active in promoting growth of the target plants, such as nutrients or growth promoters. The mode of action of many active ingredients requires the active compound to be taken up into the target plant or the plant pest. Problems can arise when the active ingredients are not readily able to penetrate the plant. This results in a reduction in the efficacy of the plant protection formulation.

It is known in the art to take steps to promote the penetration of plant protection active ingredients into plants. US 2012/0157310 relates to the use of alkyl carboxylic acid amides as penetration enhancers. In particular, US 2012/0157310 discloses the use of carboxamides of the formula:

$$R^1 - CO - NR^2R^3$$

in which $R^1$ is a $C_3$ to $C_{19}$ alkyl group; $R^2$ is a $C_1$ to $C_6$ alkyl group; and $R^3$ is hydrogen or a $C_1$ to $C_6$ alkyl group, for promoting the penetration into plants of agrochemical active substances.

Surprisingly, it has now been found that N-alkylpyrrolidones increase the penetrability of an agrochemical active component through the cuticle of plants, thereby enhancing the effectiveness of the active component and formulations containing the active component.

Therefore, the present invention relates to the use of an N-alkylpyrrolidone in the promotion of penetration of an agrochemical active ingredient into a plant.

In a first aspect, the present invention provides the use of an N-alkylpyrrolidone in the promotion of penetration of an agrochemical active ingredient into a plant.

It has been found that using one or more N-alkylpyrrolidones the penetration of agrochemically active compounds into a plant can be significantly increased. This in turn increases the efficacy of the active compound. In practical terms, this can also reduce the amount of the active compound that is required to be used, for example being applied to the plant, plant parts or a locus.

Preferably, the N-alkylpyrrolidone is of the general formula (I):

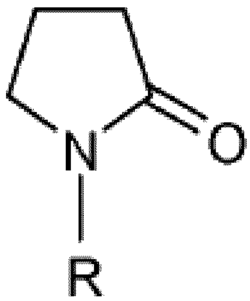

(I)

wherein R is an alkyl group.

In N-alkylpyrrolidones of general formula (I), R may be a linear alkyl group or may be a branched alkyl group. It is particularly preferred that R is a linear alkyl group.

In N-alkylpyrrolidones of general formula (I), R may be an alkyl group having any suitable number of carbon atoms. In particular, R may be an alkyl group having from at least 1 carbon atoms, more preferably at least 2 carbon atoms. In particularly preferred embodiments, R is an alkyl group having at least 4 carbon atoms, more preferably at least 6 carbon atoms, still more preferably at least 8 carbon atoms.

In N-alkylpyrrolidones of general formula (I), R may be an alkyl group having up to 20 carbon atoms, more preferably up to 18 carbon atoms. In particularly preferred embodiments, R is an alkyl group having up to 16 carbon atoms, more preferably up to 14 carbon atoms, still more preferably up to 12 carbon atoms.

In N-alkylpyrrolidones of general formula (I), R may be an alkyl group having from 1 to 20 carbon atoms, more preferably from 2 to 18 carbon atoms, still more preferably from 2 to 16 carbon atoms, especially from 2 to 14 carbon atoms. In particular preferred embodiments, R is an alkyl group having from 6 to 14 carbon atoms, more preferably from 8 to 12 carbon atoms.

Examples of particularly suitable N-alkylpyrrolidones are N-ethyl-pyrrolidone, N-butyl-pyrrolidone, N-hexyl-pyrrolidone, N-octyl-pyrrolidone, N-decyl-pyrrolidone, N-dodecyl-pyrrolidone, N-myristyl-pyrrolidone and mixtures thereof. Amongst the particularly preferred N-alkyl-pyrrolidones is N-octyl-pyrrolidone.

The present invention may employ a single N-alkylpyrrolidone or a mixture of two or more N-alkylpyrrolidones.

The present invention may be employed to increase the penetration into plants of a wide range of agrochemically active compounds, either individually or in a mixture of two or more active compounds. Suitable active compounds for use in the present invention include one or a mixture of fungicides, insecticides, herbicides and plant growth regulators.

The fungicide may be selected from one or a mixture of the following: azoxystrobin, dimoxystrobin, famoxadone, fenamidone, kresoxim-methyl, metaminostrobin, picoxystrobin, pyraclostrobin, trifloxystrobin, azaconazole, bitertanol, bromuconazole, cyproconazole, diclobutrazole, difenoconazole, diniconazole, epoxiconazole, etaconazole, fenbuconazole, fluquinconazole, flusilazole, flutriafol, hexaconazole, imibenconazole, ipconazole, metconazole, mycolbutanil, paclebutrazol, penconazole, propiconazole, prothioconazole, simeconazole, tebuconazole, tetraconazole, tridimefon, tridimenol, triticonazole, penthiopyrad, fluxapyroxad, fenamidone, thifluzamide, fenhexamid, mandipropamid, fluopicolide, fluopyram, zoxamide, benthiavalicarb-isopropyl, methasulfocarb, methfuroxam, probenazole, diphenylamine, dipyrithione, ditalimfos, dithianon, dodine, drazoxolon, edifenphos, ethaboxam, ethirimol, etridiazole, famoxadone, fenapanil, fenarimol, fenfuram, fenitropan, fenoxanil, fenpiclonil, fenpropimorph, ferbam, fluazinam, flubenzimine, fludioxonil, flumorph, fluoromide, flurprimidol, flutolanil, folpet; fosetyl-Al, uralaxyl; furametpyr, furcarbanil, furmecyclox, guazatine, hymexazol, imazalil, iminoctadine, triacetate, iprobenfos, iprodione, iprovalicarb, isoprothiolane, kasugamycin, mancozeb, maneb, mepanipyrim, metalaxyl, metalaxyl-M, metiram, metominostrobin, metsulfovax, mildiomycin myclobutanil, myclozolin, natamycin, noviflumuron, ofurace, orysastrobin, oxadixyl, oxolinic acid, oxpoconazole, paclobutrazol, pefurazoate, phosdiphen, phthalide, picoxystrobin, piperalin, polyoxins, polyoxorim, prochloraz, procymidone, propamocarb, propineb, proquinazid, pyrazophos, pyrifenox, pyrimethanil, pyroquilon, pyroxyfur, pyrrolnitrine, quinoxyfen, quintozene, and silthiofam.

The insecticide may be selected from one or a mixture of alanycarb, aldicarb, aminocarb, bendiocarb, benfuracarb, bufencarb, butocarboxim, fenobucarb, formetanate, isoprocarb, methiocarb, methomyl, metolcarb, oxamyl, pirimicarb, promecarb, thiodicarb , profenofos, propaphos, prothiofos, pyridaphenthion, pyridathion, sebufos, sulprofos, tebupirimfos, temephos, terbufos, tetrachlorvinphos, thiometon, triazophos, vamidothion, dimethoate, ethoprophos, etrimfos, fenitrothion, fosthiazate, isoxathion, malathion, mecarbam, beta-cyfluthrin, bifenthrin, cis-cypermethrin, clocythrin, cyfluthrin, cyhalothrin, cyphenothrin, deltamethrin, fenpropathrin, fenpyrithrin, fenvalerate, flumethrin, lambda-cyhalothrin, tefluthrin, acetamiprid, clothianidin, dinotefuran, imidacloprid, nitenpyram, nithiazine, thiacloprid, thiamethoxam, acetoprole, ethiprole, fipronil, abamectin, avermectin, emamectin, ivermectin, milbemectin, milbemycin, chromafenozide, halofenozide, methoxyfenozide, tebufenozide, diflubenzuron, flufenoxuron, hexaflumuron, lufenuron, teflubenzuron, bifenazate, and buprofezin.

The herbicide may be selected from one or a mixture of dicamba, picloram, fluoroxypyr, MCPA, triclopyr, diclofop-methyl, fenoxaprop-ethyl, fluazifop-butyl, quizalofop-ethyl, chloridazon, norflurazon, chlorpropham, phenmedipham, propham , alachlor, acetochlor, butachlor, metazachlor, metolachlor, pretilachlor, pendimethalin, trifluralin, fluoroglycofen, fomesafen, oxyfluorfen, diuron, isoproturon, linuron, clethodim, cycloxydim, sethoxydim, imazethapyr, imazamethabenz, imazapyr, imazaquin, amidosulfuron, bensulfuron-methyl, chlorimuron-ethyl, chlorsulfuron, cinosulfuron, metsulfuron-methyl, nicosulfuron, primisulfuron, pyrazosulfuron-ethyl, thifensulfuron-methyl, triasulfuron, tribenuron-methyl, metamitron, metribuzin, bentazone, cinmethylin, clomazone, clopyralid, dithiopyr, glufosinate, glyphosate, isoxaben, pyridate, quinchlorac, sulphosate, and tridiphane.

The plant growth regulator may be selected from one or a mixture of cyclanilide, ethephon, benzyladenine, gibberellic acid, mefenpyr, isoxadifen, and cloquintocct-mexyl.

The activity of the N-alkylpyrrolidone in increasing the penetration of the active compound into the plant is particularly effective when the active compound is a triazole, a strobilurin, such as fluoxastrobin, or a phenyl urea, especially a thiadiazolylurea, such as thiadiazuron.

The activity of the N-alkylpyrrolidone in increasing the penetration of the active compound into the plant has been found to be particularly high when the active component is a triazole. The present invention may be employed to improve the penetration of any agrochemically active triazole compound. Preferred triazoles are tebuconazole, triadimenol, triadimefon, epoxiconazole, metconazole, flusilazole, cyproconazole, penconazole, prothioconazole, propiconazole and tricyclazole. One particularly preferred triazole is prothioconazole.

The amount of N-alkylpyrrolidone employed depends on such factors as the active compound or compounds being used, the amount of the active compound and the type of formulation being used.

In one embodiment, the N-alkylpyrrolidone is employed as a solvent for the active compound or compounds. That is, the N-alkylpyrrolidone is a component in the agrochemical formulation and performs two functions, that is as both a solvent for one or more components of the formulation and as a penetration enhancer for the active compound or compounds.

In an alternative embodiment, the N-alkylpyrrolidone is employed as an additive. That is, the N-alkylpyrrolidone is added to an existing agrochemical formulation. For example, the N-alkylpyrrolidone may be used as an additive for

tank-mixing. In particular, the N-alkylpyrrolidine can be used as an additive provided to a diluted spray mixture of the plant protection composition just prior to application of the spray mixture to the plants being treated or the locus. Alternatively, the N-pyrrolidone can also be used as a mixing partner of the plant protection composition, to enhance the penetrability of the active component, thereby enhancing the bioactivity of the component.

In a further embodiment, the N-pyrrolidone is applied to the plants being treated or their locus as a separate formulation to the agrochemical composition, either simultaneously, for example by spraying from a separate tank, or at a different time, either before or after the agrochemical composition.

In general, sufficient N-alkylpyrrolidone is employed to increase penetration of the active compound or compounds into the target plant to the required level. The total amount of the active compound may the same or greater amount by weight than the N-alkylpyrrolidone. In some embodiments, however, the N-alkylpyrrolidone may be employed in a greater amount by weight than the total amount of the active compound being used.

The weight ratio of the total amount of the active compound to the N-alkylpyrrolidone may range up to about 15:1, preferably up to about 12:1, and more preferably up to about 10:1, still more preferably up to 8:1, more preferably still up to about 5:1. The weight ratio of the total amount of the active compound to the N-alkylpyrrolidone may range up to about 3:1, preferably up to about 2:1, and more preferably up to about 1.5:1.

The weight ratio of the N-alkylpyrrolidone to the total amount of the active compound may range up to about 15:1, preferably up to about 12:1, and more preferably up to about 10:1, still more preferably up to about 8:1, more preferably still up to about 5:1. The weight ratio of the total amount of the N-alkylpyrrolidone to the active compound may range up to about 3:1, preferably up to about 2:1, and more preferably up to about 2:1.

The weight ratio of the total amount of the active compound to the N-alkylpyrrolidone may range from about 15:1 to about 1:15, preferably from about 12:1 to about 1:12, and more preferably from about 10:1 to about 1:10, still more preferably from 8:1 to 1:8, more preferably still from about 5:1 to 1:5. The weight ratio of the total amount of the active compound to the N-alkylpyrrolidone may range from about 3:1 to about 1:3, preferably from about 2:1 to about 1:2, and more preferably from about 1.5:1 to about 1:2.

In a further aspect, the present invention provides an agrochemical composition having improved penetration of the active compound, the composition comprising:

(1) at least one agrochemically active comopund;

(2) at least one N-alkylpyrrolidone; and

(3) optionally one or more agriculturally acceptable formulation additive.

The at least one agrochemically active compound may be present in the composition in any suitable amount. The at least one agrochemically active compound may be present in an amount of from about 0.5% by weight, preferably from 1% by weight, more preferably from about 2%, still more preferably about 3%, more preferably still about 5% by weight. The at least one agrochemically active compound may be present in an amount of up to 95% by weight, preferably up to 90% by weight, more preferably up to 80% by weight, still more preferably up to 70% by weight, more preferably still up to 60%, especially up to 50% by weight. The at least one agrochemically active compound may be present in the composition in an amount of from 0.5 to 95% by weight, preferably from 1 to 90%, more preferably from 5 to 50% by weight. The at least one agrochemically active compound may be present in the composition in an amount of from 5 to 30% by weight, preferably from about 10 to 25%, more preferably from about 20 to about 30% by weight.

The N-alkylpyrrolidone may be present in the liquid composition in any suitable amount. The N-alkylpyrrolidone may be present in an amount of from about 0.5% by weight, preferably from 1% by weight, more preferably from about 2%, still more preferably about 3%, more preferably still about 5% by weight. The N-alkylpyrrolidone may be present in an amount of up to 95% by weight, preferably up to 90% by weight, more preferably up to 80% by weight, still more preferably up to 70% by weight. The N-alkylpyrrolidone may be present in the composition in an amount of from 0.5 to 95% by weight, preferably from 1 to 90%, more preferably from 2 to 80% by weight, still more preferably from 5 to 70% by weight. The N-alkylpyrrolidone may be present in the composition in an amount of from 10 to 60% by weight, more preferably from 15 to 50% by weight.

In one embodiment, the composition comprises:

(1) about 1 to 90% by weight, preferably about 5 to 50%, of at least one agrochemically active ingredient;

(2) about 1 to 90% by weight, preferably about 5 to 70%, of at least one N-alkylpyrrolidone as a crystallization inhibitor having the formula (I):

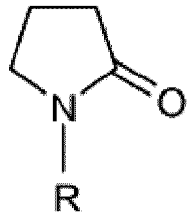

(I)

where R is an alkyl group, preferably wherein R is a linear saturated alkyl group having 6 to 14 carbon atoms, more preferably a linear saturated alkyl group having 8 to 12 carbon atoms; and

(3) about 0 to 98% by weight of one or more agrochemical additives.

The composition may be formulated as one of a number of different formulation types. The techniques for preparing the formulations are well known to a person skilled in the art. The composition may be an emulsifiable concentrate (EC), suspension concentrate (SC), soluble concentrate (SL), capsule suspension (CS), emulsion in water (EW), suspension emulsion (SE), oil dispersion (OD), encapsulated granules (EG), flowable concentrate for treatment (FS), water dispersible granules (WG), wettable powder (WP), water soluble granules (SG), water soluble powder (SP), granules (GR), oil solution (OL), capsulated granules (CG), dry flowable (DF), ultra-low volume (ULV) and other suitable dosage forms.

The preferred formulation types are emulsifiable concentrates (EC), emulsions in water (EW), suspension concentrates (SC), oil dispersions (OD), suspension emulsions (SE), capsule suspensions (CS), flowable concentrates for treatment (FS), and soluble concentrates (SL). More preferably, the composition is an emulsifiable concentrate (EC) formulation.

When the N-alkylpyrrolidone is used as a solvent or an additive to be included in the agrochemical formulation, it is especially preferred for the formulation type to be an emulsifiable concentrate (EC).

In embodiments where the N-alkylpyrrolidone is used as an additive for a tank-mix, any of the above-mentioned types of formulations may be employed.

The composition may comprise one or more commonly used formulation components and adjuvants as known in the art, such as one or more of a solvent, anti-foaming agent, emulsifier, dispersing agent, preservative, antioxidant, pH regulator, coloring agent, and filler. Water may also be optionally present in the composition. Preferably, the composition is a liquid formulation.

Suitable solvents include, but are not limited to, vegetable oil; animal oil; aliphatic hydrocarbons; aromatic hydrocarbons, such as toluene, xylene, and tetrahydronaphthalene; alcohols, such as methanol, ethanol, propanol, butanol, and cyclohexanol; ketones, such as cyclohexanone, and isophorone; dimethyl sulfoxide, N,N-dimethylformamide, N,N-dimethyldecanamide and $\gamma$-butyrolactone, and the like.

Suitable anti-foaming agents include fatty acid alkyl ester alkoxide; organic polysiloxanes, such as polydimethylsiloxane, and a mixture thereof with fine, optionally silylated silicon dioxide; perfluoroalkyl phosphonate and phosphinate.

Suitable emulsifiers include alcohol alkoxides, alkylphenol ethoxylates, alkylpolysaccharides, amine ethoxides, castor oil ethoxide, sorbitan fatty acid ester ethoxide, polyoxyethylene fatty acid, amine alkylbenzene sulfonates, ammonium dodecylbenzene sulphonate, calcium alkylsulfonates and calcium alkylbenzenesulfonates.

Suitable dispersing agents include nonionic, amphoteric, cationic, and anionic (polymeric) surfactants. Preferred dispersing agents depend upon the type of formulation and include fatty alcohol ethoxides, fatty alcohol alkoxides, EO/PO block copolymers, alkylaryl sulfonic acids, alkyl sulfonic acids, sulfonic acid of ethoxylated alcohols, sulfosuccinate salt, fatty acid methyl taurine salts, tristyrene phenol ethoxylate and alkoxide, tri-sec-butyl phenol ethoxylate, sulfated cresol-formaldehyde condensate, sulfated condensate of naphthalene and alkyl naphthalene, lignosulphonate salts, ethoxylated fatty alcohols, phosphates of tristyrene phenol and tri-sec-butyl phenol, ethoxylated fatty alcohols, polyacrylic acids, polymethacrylate and acrylate copolymers, ether sulfate salts of tristyrene phenol and tri-sec-butyl phenol and polymer dispersing agents.

Suitable preservatives include organic acids and the esters thereof, such as ascorbic acid, ascorbyl palmitate, sorbate, benzoic acid, methyl and propyl 4-hydroxybenzoates, propionate, and phenol, such as 2-phenylphenol salt, 1,2-benzisothiazolin-3-one and formaldehyde.

Suitable pH regulators include acetic acid, citric acid, phosphoric acid, potassium dihydrogen phosphate, sodium bicarbonate, etc.

Suitable antioxidants include BHT (2,6-di-tert-butyl-4-methylphenol).

Suitable coloring agents include inorganic or organic coloring agents, such as titanium dioxide, carbon black, zinc oxide and blue pigments.

Suitable fillers include precipitated white carbon, kaolin, bentonite, montmorillonite, saccharose, corn starch, potassium sulphate, talc powder, diatomaceous earth, sepiolite, and the like.

The content of each component in the composition may vary in a wide range. The compositions may be prepared using techniques well known to a person skilled in the art.

The composition may be applied to plants and/or their locus. The application rate of the composition varies with plants and conditions. Generally, appropriate amounts and application rates are the customary field doses known to a person skilled in the art. The amount of formulation is usually decided for a specific application field. Preferred concentrations of the active compounds when applied to the plants and/or their locus range from 0.01 wt% to 99 wt%, more preferably from 0.1 wt% to 90 wt%.

The composition can be applied directly to the plants and/or their locus. Alternatively, the composition is applied after diluting with water. The diluted composition is typically employed as an aqueous spray liquid. The aqueous spray liquid can be in the form of an emulsion, a dispersion or a solution. Methods of application include spraying, pouring and injecting. Preferably, the diluted composition is applied in the form of spray.

In a further aspect, the present invention provides a method for increasing the penetration of an agrochemically active compound into a plant, the method comprising providing the agrochemically active compound to the plant together with one or more N-alkylpyrrolidones.

In a still further aspect, the present invention provides a method for increasing the effectiveness of an agrochemically active compound into a plant, the method comprising providing the agrochemically active compound to the plant together with one or more N-alkylpyrrolidones.

Embodiments of the present invention will now be described, for illustrative purposes only, by way of the following examples.

Unless otherwise indicated, percentages are weight percent of the composition.

EXAMPLES

Experiments were conducted to examine the penetrability of a range of agrochemically active compounds when used both with and without an N-alkylpyrrolidone.

Example 1: Permeation Experiment 1

This experiment measured the permeation flux of active components across the cuticle of apple skin. The permeation was determined by passing the active component in formulation through the cuticle of apple skin which had been separated by enzymolysis.

The experimental procedure was as follows:

a) Peeling of cuticle

A circular fruit slice (diameter: 2cm) was obtained from the equator of each apple using a puncher. The pulp on each circular fruit slice was removed as much as possible using a double-edged stainless-steel blade (about 1 mm thickness).

The circular slices thus obtained were incubated in a citrate buffer (20 mmol/L, pH 3.7) containing 2% pectinase, 0.1% cellulase and 30 mM $NaN_3$ (for inhibiting microbial growth) at 37°C for 3 to 4 days, until the pectin layer under the circular apple skin slices was enzymolysed completely. During the incubation step, buffer replacement took place whenever the buffer had become cloudy.

Thereafter, the enzymolysed separated cuticle slices were washed with deionized water. The washed cuticles were then placed on a polytetrafluoroethylene tray and blown with a small airflow to dry and obtain the cuticle samples.

b) Franze diffusion cell method

Each cuticle slice obtained as described above was placed into a Franze diffusion cell, in which the outer surface of the cuticle was contacting the pesticide delivering system, and the inner surface of the cuticle was contacting the receptor chamber fully filled with deionized water.

c) Formulations

Compositions were prepared having the components summarized in Tables A to D below.

Each of the compositions was diluted 100 times with deionized water to form its sample formulation used in the Franze diffusion cell.

Table A

| Example No. | Components | N-alkylpyrrolidone | γ-butyrolactone |
|---|---|---|---|
| A1 | 20% tebuconazole + 10% Castor oil ethoxide + 10% calcium dodecyl benzene sulfonate | 40% N-methyl-pyrrolidone | Make up to 100% using γ-butyrolactone |
| A2 | 20% tebuconazole + 10% Castor oil ethoxide + 10% calcium dodecyl benzene sulfonate | 40% N-ethyl-pyrrolidone | Make up to 100% using γ-butyrolactone |
| A3 | 20% tebuconazole + 10% Castor oil ethoxide + 10% calcium dodecyl benzene sulfonate | 40% N-butyl-pyrrolidone | Make up to 100% using γ-butyrolactone |
| A4 | 20% tebuconazole + 10% Castor oil ethoxide + 10% calcium dodecyl benzene sulfonate | 40% N-hexyl-pyrrolidone | Make up to 100% using γ-butyrolactone |
| A5 | 20% tebuconazole + 10% Castor oil ethoxide + 10% calcium dodecyl benzene sulfonate | 40% N-octyl-pyrrolidone | Make up to 100% using γ-butyrolactone |
| A6 | 20% tebuconazole + 10% Castor oil ethoxide + 10% calcium dodecyl benzene sulfonate | 40% N-decyl-pyrrolidone | Make up to 100% using γ-butyrolactone |
| A7 | 20% tebuconazole + 10% Castor oil ethoxide + 10% calcium dodecyl benzene sulfonate | 40% N-dodecyl-pyrrolidone | Make up to 100% using γ-butyrolactone |

Comparative composition A was prepared having the same composition as Example A1, with the omission of the N-akylpyrrolidone and the balance being made up to 100% with γ-butyrolactone.

Table B

| Example No. | Components | N-alkylpyrrolidone | γ-butyrolactone |
|---|---|---|---|
| B1 | 20% prothioconazole + 10% Castor oil ethoxide + 10%calcium dodecylbenzenesulfonate | 40% N-methyl pyrrolidone | Make up to 100% using γ-butyrolactone |
| B2 | 20% prothioconazole + 10% Castor oil ethoxide + 10%calcium dodecylbenzenesulfonate | 40% N-ethyl-pyrrolidone | Make up to 100% using γ-butyrolactone |
| B3 | 20% prothioconazole + 10% Castor oil ethoxide + 10%calcium dodecylbenzenesulfonate | 40% N-butyl-pyrrolidone | Make up to 100% using γ-butyrolactone |
| B4 | 20% prothioconazole + 10% Castor oil ethoxide + 10%calcium dodecylbenzenesulfonate | 40% N-hexyl-pyrrolidone | Make up to 100% using γ-butyrolactone |
| B5 | 20% prothioconazole + 10% Castor oil ethoxide + 10%calcium dodecylbenzenesulfonate | 40% N-octyl-pyrrolidone | Make up to 100% using γ-butyrolactone |
| B6 | 20% prothioconazole + 10% Castor oil ethoxide + 10%calcium dodecylbenzenesulfonate | 40% N-decyl-pyrrolidone | Make up to 100% using γ-butyrolactone |
| B7 | 20% prothioconazole + 10% Castor oil ethoxide + 10%calcium dodecylbenzenesulfonate | 40% N-dodecyl-pyrrolidone | Make up to 100% using γ-butyrolactone |
| B8 | 20% Fluoxastrobin+ 10% Castor oil ethoxide + 10%calcium dodecylbenzenesulfonate | 40% N-hexyl-pyrrolidone | Make up to 100% using γ-butyrolactone |
| B9 | 20% Fluoxastrobin+ 10% Castor oil ethoxide + 10%calcium dodecylbenzenesulfonate | 40% N-octyl-pyrrolidone | Make up to 100% using γ-butyrolactone |
| B10 | 20% Fluoxastrobin+ 10% Castor oil ethoxide + 10%calcium dodecylbenzenesulfonate | 40% N-decyl-pyrrolidone | Make up to 100% using γ-butyrolactone |
| B11 | 20% thidiazuron + 10% Castor oil ethoxide + 10% calcium dodecylbenzenesulfonate | 40% N-octyl-pyrrolidone | Make up to 100% using γ-butyrolactone |

(continued)

| Example No. | Components | N-alkylpyrrolidone | γ-butyrolactone |
|---|---|---|---|
| B12 | 20% propiconazole+ 10% Castor oil ethoxide + 10%calcium dodecylbenzenesulfonate | 40% N-octyl-pyrrolidone | Make up to 100% using γ-butyrolactone |
| B13 | 20% triadimenol + 10% Castor oil ethoxide + 10% calcium dodecylbenzenesulfonate | 40% N-butyl-pyrrolidone | Make up to 100% using γ-butyrolactone |
| B14 | 20% epoxiconazole+ 10% Castor oil ethoxide + 10%calcium dodecylbenzenesulfonate | 40% N-hexyl-pyrrolidone | Make up to 100% using γ-butyrolactone |

Comparative composition B1 was prepared having the same composition as Example B1, with the omission of the N-akylpyrrolidone and the balance being made up to 100% with γ-butyrolactone.

Comparative composition B2 was prepared having the same composition as Example B8, with the omission of the N-akylpyrrolidone and the balance being made up to 100% with γ-butyrolactone.

Comparative compositions B3 to B7 were prepared having the same composition as Examples B11 to B14 respectively, with the omission of the N-akylpyrrolidone and the balance being made up to 100% with γ-butyrolactone.

Table C

| Example No. | Prothioconazole (%) | N-octyl-pyrrolidone (%) | Castor oil ethoxide + calcium dodecylbenzenesulfonate | γ-butyrolactone |
|---|---|---|---|---|
| C1 | 15 | 1.5 | 10% Castor oil ethoxide + 10% calcium dodecylbenzenesulfonate | Make up to 100% using γ-butyrolactone |
| C2 | 15 | 5 | 10% Castor oil ethoxide + 10% calcium dodecylbenzenesulfonate | Make up to 100% using γ-butyrolactone |
| C3 | 30 | 15 | 10% Castor oil ethoxide + 10% calcium dodecylbenzenesulfonate | Make up to 100% using γ-butyrolactone |
| C4 | 27 | 18 | 10% Castor oil ethoxide + 10% calcium dodecylbenzenesulfonate | Make up to 100% using γ-butyrolactone |
| C5 | 20 | 20 | 10% Castor oil ethoxide + 10% calcium dodecylbenzenesulfonate | Make up to 100% using γ-butyrolactone |
| C6 | 20 | 40 | 10% Castor oil ethoxide + 10% calcium dodecylbenzenesulfonate | Make up to 100% using γ-butyrolactone |
| C7 | 10 | 30 | 10% Castor oil ethoxide + 10% calcium dodecylbenzenesulfonate | Make up to 100% using γ-butyrolactone |

Table D

| Example No. | Prothioconazole (%) | Solvesso | N-octyl-pyrrolidone (%) | Castor oil ethoxide + calcium dodecylbenzenesulfonate |
|---|---|---|---|---|
| D1 | 27 | 20 | 18 | 10% Castor oil ethoxide + 10% calcium dodecylbenzenesulfonate + Making up to 100% using γ-butyrolactone |
| D2 | 20 | 20 | 40 | 10% Castor oil ethoxide + 10% calcium dodecylbenzenesulfonate + Making up to 100% using γ-butyrolactone |
| D3 | 27 | 0 | 18 | 10% Castor oil ethoxide + 10% calcium dodecylbenzenesulfonate + Making up to 100% using γ-butyrolactone |
| D4 | 20 | 0 | 40 | 10% Castor oil ethoxide + 10% calcium dodecylbenzenesulfonate + Making up to 100% using γ-butyrolactone |

d) Permeability test

Each of the permeability tests was conducted by administering 10 μL of the diluted solution sample into the pesticide delivering system for the Franze diffusion cell. The ambient temperature and the relative humidity were set at 25°C and 60% respectively.

During each test, the deionized water in the receptor chamber was sampled 3 and 48 hours after the administration of the sample. HPLC was used to determine the concentration of the agricultural active compound in each of the deionized water samples.

The permeability of the sample formulations was calculated using the following formula:

$$\text{Permeability} = V_0{*}C_0/(V_1{*}C_1) * 100\%$$

where:

$V_0$ represents the receptor chamber volume
Co represents the mass concentration of the active material in the receptor chamber
$V_1$ represents the administration volume
$C_1$ represents the mass concentration of the administration.

The results are as shown in Tables 1, 2, 3 and 4 below.

Table 1

| Examples | | | Comparative Example A | |
|---|---|---|---|---|
| | Permeability after 3 h (%) | Permeability after 48 h (%) | Permeability after 3 h (%) | Permeability after 48 h (%) |
| A1 | 2.75 | 8.25 | 0.12 | 2.31 |
| A2 | 5.28 | 35.29 | | |
| A3 | 14.28 | 40.21 | | |
| A4 | 8.19 | 36.29 | | |
| A5 | 20.18 | 54.12 | | |
| A6 | 18.24 | 50.28 | | |
| A7 | 16.27 | 48.23 | | |

Table 2

| Examples | | | Comparative Example | | |
|---|---|---|---|---|---|
| | Permeability after 3 h (%) | Permeability after 48 h (%) | | Permeability after 3 h (%) | Permeability after 48 h (%) |
| B1 | 1.33 | 6.97 | B1 | 0.16 | 3.33 |
| B2 | 10.23 | 50.12 | | | |
| B3 | 13.18 | 61.23 | | | |
| B4 | 12.12 | 53.23 | | | |
| B5 | 21.23 | 75.45 | | | |
| B6 | 18.98 | 68.27 | | | |
| B7 | 19.96 | 70.24 | | | |
| B8 | 8.19 | 43.78 | B2 | 0.23 | 4.97 |
| B9 | 15.11 | 58.12 | | | |
| B10 | 13.24 | 54.23 | | | |
| B11 | 9.12 | 45.85 | B3 | 8.52 | 10.79 |
| B12 | 8.29 | 48.28 | B4 | 0.08 | 1.24 |
| B13 | 6.12 | 40.21 | B5 | 0.33 | 1.24 |
| B14 | 7.23 | 35.12 | B6 | 0.19 | 2.26 |

Table 3

| | Prothioconazole : N-octyl-pyrrolidone | Permeability after 3 h (%) | Permeability after 48 h (%) |
|---|---|---|---|
| C1 | 10 : 1 | 2.8 | 10.3 |
| C2 | 3 : 1 | 8.68 | 31.44 |
| C3 | 2 : 1 | 10.97 | 39.87 |
| C4 | 1.5 : 1 | 12.78 | 55.88 |
| C5 | 1 : 1 | 13.11 | 63.12 |
| C6 | 1 : 2 | 20.12 | 75.22 |
| C7 | 1 : 3 | 18.23 | 47.97 |

Table 4

| | Permeability after 3 h (%) | Permeability after 48 h (%) |
|---|---|---|
| D1 | 14.12 | 52.33 |
| D2 | 19.54 | 71.19 |
| D3 | 12.78 | 47.97 |
| D4 | 18.76 | 66.02 |

As can be seen from the data presented in Tables 1 to 4, the presence of an N-alkylpyrrolidone in the compositions significantly increased the permeability of the active compound through the cuticle of the apple skin, in turn significantly increasing the penetration of the active compound through the skin.

Example 2: Permeation Experiment 2

This experiment was conducted to determine the permeability of formulations having different concentrations of active material formulated with different amounts of N-alkylpyrrolidone, azone (1-dodecylazacycloheptan-2-one or laurocapran), or γ-butyrolactone as solvents.

Active material and formulation adjuvants were mixed with either N-alkylpyrrolidone, azone or γ-butyrolactone solvents.

Thereafter, the resulting solutions were diluted with water into diluents containing 0.5 g/L and 1 g/L of active material, and 0.25 g/L, 0.5 g/L and 1 g/L of N-alkyl-pyrrolidone, azone, or γ-butyrolactone solvents.

The permeability of the diluents was measured with the method and equipment as described in section d) of the Permeation Experiment 1 of Example 1 above.

The test results are shown in Table 5 below.

Table 5

| Solvent | Prothioconazole concentration (g/L) | Solvent concentration (g/L) | Permeability after 3 h (%) | Permeability after 48 h (%) |
|---|---|---|---|---|
| Acetone | 0.5 | Remainder | 0.21 | 0.73 |
| N-butyl-pyrrolidone | 0.5 | 0.25 | 3.21 | 12.12 |
| N-octyl-pyrrolidone | 0.5 | 0.25 | 7.27 | 26.29 |
| Azone | 0.5 | 0.25 | 0.32 | 1.23 |
| γ-butyrolactone | 0.5 | 0.25 | 0.28 | 1.44 |
| N-butyl-pyrrolidone | 0.5 | 0.5 | 5.28 | 18.93 |
| N-octyl-pyrrolidone | 0.5 | 0.5 | 10.23 | 33.78 |
| Azone | 0.5 | 0.5 | 0.42 | 1.57 |
| γ-butyrolactone | 0.5 | 0.5 | 0.40 | 1.89 |
| N-butyl-pyrrolidone | 0.5 | 1.0 | 6.11 | 25.12 |
| N-octyl-pyrrolidone | 0.5 | 1.0 | 12.52 | 40.21 |
| Azone | 0.5 | 1.0 | 2.50 | 5.35 |
| γ-butyrolactone | 0.5 | 1.0 | 1.88 | 4.18 |
| N-butyl-pyrrolidone | 1.0 | 1.0 | 5.88 | 19.17 |
| N-octyl-pyrrolidone | 1.0 | 1.0 | 11.56 | 38.12 |
| Azone | 1.0 | 1.0 | 2.20 | 5.19 |
| γ-butyrolactone | 1.0 | 1.0 | 1.56 | 4.25 |

The data in Table 5 demonstrate that the presence of an N-alkylpyrrolidone greatly enhances the penetrability of the active compound through the cuticle of the apple skin. This effect is particularly pronounced when the active compound is a triazole insecticide.

## Claims

1. Use of an N-alkylpyrrolidone in the promotion of penetration of an agrochemical active ingredient into a plant.

2. The use according to claim 1, wherein an N-alkylpyrrolidone of the general formula (I) is employed:

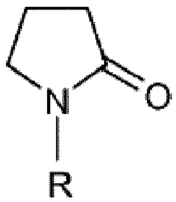

(I)

wherein R is an alkyl group, preferably wherein R is a linear alkyl group.

3. The use according to claim 2, wherein R is an alkyl group having from at least 1 carbon atoms, preferably at least 2 carbon atoms, more preferably an alkyl group having at least 4 carbon atoms, still more preferably at least 6 carbon atoms, more preferably still at least 8 carbon atoms; and/or wherein R is an alkyl group having up to 20 carbon atoms, preferably up to 18 carbon atoms, more preferably up to 16 carbon atoms, still more preferably up to 14 carbon atoms, more preferably still up to 12 carbon atoms; and/or wherein R is an alkyl group having from 1 to 20 carbon atoms, preferably from 2 to 18 carbon atoms, more preferably from 2 to 16 carbon atoms, still more preferably from 2 to 14 carbon atoms, more preferably still from 6 to 14 carbon atoms, more preferably from 8 to 12 carbon atoms.

4. The use according to any preceding claim, wherein the N-alkylpyrrolidone is selected from N-ethyl-pyrrolidone, N-butyl-pyrrolidone, N-hexyl-pyrrolidone, N-octyl-pyrrolidone, N-decyl-pyrrolidone, N-dodecyl-pyrrolidone, N-myristyl-pyrrolidone and mixtures thereof, preferably N-octyl-pyrrolidone.

5. The use according to any preceding claim, wherein the agrochemical active ingredient is one or a mixture of one or more fungicides, insecticides, herbicides and plant growth regulators; preferably wherein the fungicide is selected from one or a mixture of azoxystrobin, dimoxystrobin, famoxadone, fenamidone, kresoxim-methyl, metaminostrobin, picoxystrobin, pyraclostrobin, trifloxystrobin, azaconazole, bitertanol, bromuconazole, cyproconazole, diclobutrazole, difenoconazole, diniconazole, epoxiconazole, etaconazole, fenbuconazole, fluquinconazole, flusilazole, flutriafol, hexaconazole, imibenconazole, ipconazole, metconazole, mycolbutanil, paclebutrazol, penconazole, propiconazole, prothioconazole, simeconazole, tebuconazole, tetraconazole, tridimefon, tridimenol, triticonazole, penthiopyrad, fluxapyroxad, fenamidone, thifluzamide, fenhexamid, mandipropamid, fluopicolide, fluopyram, zoxamide, benthiavalicarb-isopropyl, methasulfocarb, methfuroxam, probenazole, diphenylamine, dipyrithione, ditalimfos, dithianon, dodine, drazoxolon, edifenphos, ethaboxam, ethirimol, etridiazole, famoxadone, fenapanil, fenarimol, fenfuram, fenitropan, fenoxanil, fenpiclonil, fenpropimorph, ferbam, fluazinam, flubenzimine, fludioxonil, flumorph, fluoromide, flurprimidol, flutolanil, folpet; fosetyl-Al, uralaxyl; furametpyr, furcarbanil, furmecyclox, guazatine, hymexazol, imazalil, iminoctadine, triacetate, iprobenfos, iprodione, iprovalicarb, isoprothiolane, kasugamycin, mancozeb, maneb, mepanipyrim, metalaxyl, metalaxyl-M, metiram, metominostrobin, metsulfovax, mildiomycin myclobutanil, myclozolin, natamycin, noviflumuron, ofurace, orysastrobin, oxadixyl, oxolinic acid, oxpoconazole, paclobutrazol, pefurazoate, phosdiphen, phthalide, picoxystrobin, piperalin, polyoxins, polyoxorim, prochloraz, procymidone, propamocarb, propineb, proquinazid, pyrazophos, pyrifenox, pyrimethanil, pyroquilon, pyroxyfur, pyrrolnitrine, quinoxyfen, quintozene, and silthiofam; and/or wherein the insecticide is selected from one or a mixture of alanycarb, aldicarb, aminocarb, bendiocarb, benfuracarb, bufencarb, butocarboxim, fenobucarb, formetanate, isoprocarb, methiocarb, methomyl, metolcarb, oxamyl, pirimicarb, promecarb, thiodicarb , profenofos, propaphos, prothiofos, pyridaphenthion, pyridathion, sebufos, sulprofos, tebupirimfos, temephos, terbufos, tetrachlorvinphos, thiometon, triazophos, vamidothion, dimethoate, ethoprophos, etrimfos, fenitrothion, fosthiazate, isoxathion, malathion, mecarbam, beta-cyfluthrin, bifenthrin, cis-cypermethrin, clocythrin, cyfluthrin, cyhalothrin, cyphenothrin, deltamethrin, fenpropathrin, fenpyrithrin, fenvalerate, flumethrin, lambda-cyhalothrin, tefluthrin, acetamiprid, clothianidin, dinotefuran, imidacloprid, nitenpyram, nithiazine, thiacloprid, thiamethoxam, acetoprole, ethiprole, fipronil, abamectin, avermectin, emamectin, ivermectin, milbemectin, milbemycin, chromafenozide, halofenozide, methoxyfenozide, tebufenozide, diflubenzuron, flufenoxuron, hexaflumuron, lufenuron, teflubenzuron, bifenazate, and buprofezin; and/or wherein the herbicide is selected from one or a mixture of dicamba, picloram, fluoroxypyr, MCPA, triclopyr, diclofop-methyl, fenoxaprop-ethyl, fluazifop-butyl, quizalofop-ethyl, chloridazon, norflurazon, chlorpropham, phenmedipham, propham , alachlor, acetochlor, butachlor, metazachlor, metolachlor, pretilachlor, pendimethalin, trifluralin, fluoroglycofen, fomesafen, oxyfluorfen, diuron, isoproturon, linuron, clethodim, cycloxydim, sethoxydim, imazethapyr, imazamethabenz, imazapyr, imazaquin, amidosulfuron, bensulfuron-methyl, chlorimuron-ethyl, chlorsulfuron, cinosulfuron, metsulfuron-methyl, nicosulfuron, primisulfuron, pyrazosulfuron-ethyl, thifensulfuron-methyl, triasulfuron, tribenuron-methyl, metamitron, metribuzin, bentazone, cinmethylin, clomazone, clopyralid, dithiopyr, glufosinate, glyphosate, isoxaben, pyridate, quinchlorac, sulphosate, and tridiphane; and/or wherein the plant growth regulator is selected from one or a mixture of cyclanilide, ethephon, benzyladenine, gibberellic acid, mefenpyr, isoxadifen, and cloquintocct-mexyl.

**6.** The use according to claim 5, wherein the agrochemical active ingredient is one or a mixture of one or more triazoles, strobilurins, or phenyl ureas.

**7.** The use according to claim 6, wherein the agrochemically active ingredient is one or more triazole compounds; preferably one or more triazoles selected from tebuconazole, triadimenol, triadimefon, epoxiconazole, metconazole, flusilazole, cyproconazole, penconazole, prothioconazole, propiconazole and tricyclazole; more preferably prothioconazole.

**8.** The use according to any preceding claim, wherein the N-alkylpyrrolidone is employed as a solvent for the agrochemcially active ingredient.

**9.** The use according to any preceding claim, wherein the N-alkylpyrrolidine is used as an additive provided to a diluted spray mixture comprising the agrochemical active ingredient prior to application of the spray mixture to the plants being treated or the locus; or wherein the N-pyrrolidone is used as a mixing partner of the agrochemical active ingredient; or wherein the N-pyrrolidone is applied to the plants being treated or their locus as a separate formulation to the agrochemical active ingredient.

**10.** The use according to any preceding claim, wherein the weight ratio of the total amount of the agrochemical active compound to the N-alkylpyrrolidone is from 15:1 to 1:15, preferably from 12:1 to 1:12, more preferably from 10:1 to 1:10, still more preferably from 8:1 to 1:8, more preferably still from 5:1 to 1:5, preferably from 3:1 to 1:3, more preferably from 2:1 to 1:2, still more preferably from 1.5:1 to 1:2.

**11.** An agrochemical composition having improved penetration of the active compound, the composition comprising:

(1) at least one agrochemically active comopund;
(2) at least one N-alkylpyrrolidone; and
(3) optionally one or more agriculturally acceptable formulation additive.

**12.** The composition according to claim 11, wherein the composition comprises:

(1) about 1 to 90% by weight, preferably about 5 to 50%, of at least one agrochemically active ingredient;
(2) about 1 to 90% by weight, preferably about 5 to 70%, of at least one N-alkylpyrrolidone as a crystallization inhibitor having the formula (I):

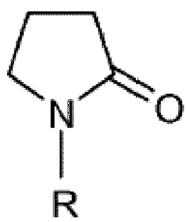

(I)

where R is an alkyl group, preferably wherein R is a linear saturated alkyl group having 6 to 14 carbon atoms, more preferably a linear saturated alkyl group having 8 to 12 carbon atoms; and
(3) about 0 to 98% by weight of one or more agrochemical additives.

**13.** The composition according to either of claims 11 or 12, wherein the composition is an emulsifiable concentrate (EC), suspension concentrate (SC), soluble concentrate (SL), capsule suspension (CS), emulsion in water (EW), suspension emulsion (SE), oil dispersion (OD), encapsulated granules (EG), flowable concentrate for treatment (FS), water dispersible granules (WG), wettable powder (WP), water soluble granules (SG), water soluble powder (SP), granules

(GR), oil solution (OL), capsulated granules (CG), dry flowable (DF), ultra-low volume (ULV); preferably an emulsifiable concentrate (EC), emulsion in water (EW), suspension concentrate (SC), oil dispersion (OD), suspension emulsion (SE), capsule suspension (CS), flowable concentrate for treatment (FS), or a soluble concentrate (SL); more preferably an emulsifiable concentrate (EC) formulation.

**14.** A method for increasing the penetration of an agrochemically active compound into a plant, the method comprising providing the agrochemically active compound to the plant together with one or more N-alkylpyrrolidones.

**15.** A method for increasing the effectiveness of an agrochemically active compound into a plant, the method comprising providing the agrochemically active compound to the plant together with one or more N-alkylpyrrolidones.

Europäisches Patentamt
European Patent Office
Office européen des brevets

# EUROPEAN SEARCH REPORT

Application Number
EP 20 16 7805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/211572 A1 (CLARIANT INT LTD [CH]) 14 December 2017 (2017-12-14) * pages 79-80; claim 1; examples 23-6; table 21 * ----- | 1-15 | INV. A01N43/653 A01N25/02 A01P3/00 A01N43/88 A01N47/36 A01N25/30 A01P13/00 |
| X | BR PI0 506 207 A (ROTAM LTD [HK]) 2 October 2007 (2007-10-02) * pages 5-6, line 22; example TB 01 * ----- | 1-15 | |
| X | WO 94/10979 A1 (ISP INVESTMENTS INC [US]) 26 May 1994 (1994-05-26) * pages 63-64; table 12 * * page 47; example 19 * ----- | 1-6,8-15 | |
| X | CN 107 251 908 A (HEFEI LONGBIN CHEMICAL TECH CO LTD) 17 October 2017 (2017-10-17) * claims 1-4 * ----- | 1-5,9, 14,15 | |
| X | CN 103 238 608 A (SHAANXI MEIBANG PESTICIDES CO) 14 August 2013 (2013-08-14) * paragraphs [0077] - [0078]; example 22 * ----- | 11-13 | TECHNICAL FIELDS SEARCHED (IPC) |
| X | US 5 369 118 A (REIZLEIN KARL [DE] ET AL) 29 November 1994 (1994-11-29) * columns 6-7; claim 10; examples 2-3 * * column 4, lines 61-68 * ----- | 11-13 | A01N |

The present search report has been drawn up for all claims

1

| Place of search | Date of completion of the search | Examiner |
|---|---|---|
| Munich | 4 August 2020 | Sawicki, Marcin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 16 7805

This annex lists the patent family members relating to the patent documents cited in the above-mentioned European search report. The members are as contained in the European Patent Office EDP file on
The European Patent Office is in no way liable for these particulars which are merely given for the purpose of information.

04-08-2020

| Patent document cited in search report | Publication date | Patent family member(s) | Publication date |
|---|---|---|---|
| WO 2017211572 A1 | 14-12-2017 | AU 2017277222 A1 | 17-01-2019 |
| | | BR 112018074876 A2 | 12-03-2019 |
| | | CN 109561676 A | 02-04-2019 |
| | | DE 102016210164 A1 | 14-12-2017 |
| | | DK 3468363 T3 | 27-04-2020 |
| | | EP 3468363 A1 | 17-04-2019 |
| | | JP 2019525895 A | 12-09-2019 |
| | | WO 2017211572 A1 | 14-12-2017 |
| BR PI0506207 A | 02-10-2007 | NONE | |
| WO 9410979 A1 | 26-05-1994 | AT 255881 T | 15-12-2003 |
| | | AU 687020 B2 | 19-02-1998 |
| | | CA 2143212 A1 | 26-05-1994 |
| | | DE 69333347 T2 | 23-09-2004 |
| | | EP 0668757 A1 | 30-08-1995 |
| | | JP 3686674 B2 | 24-08-2005 |
| | | JP H08503467 A | 16-04-1996 |
| | | NZ 258036 A | 27-07-1997 |
| | | US 5766615 A | 16-06-1998 |
| | | US 6303131 B1 | 16-10-2001 |
| | | WO 9410979 A1 | 26-05-1994 |
| CN 107251908 A | 17-10-2017 | NONE | |
| CN 103238608 A | 14-08-2013 | NONE | |
| US 5369118 A | 29-11-1994 | AT 76254 T | 15-06-1992 |
| | | AU 618889 B2 | 09-01-1992 |
| | | BR 9001528 A | 23-04-1991 |
| | | CA 2013729 A1 | 05-10-1990 |
| | | DE 3910921 C1 | 17-05-1990 |
| | | DE 59000129 D1 | 25-06-1992 |
| | | DK 0391168 T3 | 13-07-1992 |
| | | EP 0391168 A1 | 10-10-1990 |
| | | ES 2043157 T3 | 16-12-1993 |
| | | HU 204406 B | 28-01-1992 |
| | | JP 2894622 B2 | 24-05-1999 |
| | | JP H02290802 A | 30-11-1990 |
| | | MX 171046 B | 27-09-1993 |
| | | US 5369118 A | 29-11-1994 |
| | | ZA 902586 B | 30-01-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120157310 A